# EUROPÄISCHE PATENTSCHRIFT

(11) **EP 1 485 596 B1**
(45) Veröffentlichungstag und Bekanntmachung des Hinweises auf die Patenterteilung: **24.05.2006**
(21) Anmeldenummer: 02794972.6
(22) Anmeldetag: 05.12.2002
(51) Int. Cl.: F02D 41/06, F02D 41/40

(54) **VERFAHREN ZUM BETREIBEN EINER BRENNKRAFTMASCHINE MIT MEHRFACHEINSPRITZUNG IN DER STARTPHASE**
METHOD FOR OPERATING A MULTIPLE INJECTION INTERNAL COMBUSTION ENGINE IN THE STARTING PHASE
PROCEDE POUR FAIRE FONCTIONNER UN MOTEUR COMBUSTION INTERNE A INJECTIONS MULTIPLES LORS DE LA PHASE DE DEMARRAGE

(30) Priorität: 09.02.2002 DE 10205494
(43) Veröffentlichungstag der Anmeldung: 15.12.2004
(73) Patentinhaber: ROBERT BOSCH GMBH, 70442 Stuttgart (DE)
(72) Erfinder: WAGNER, Jens, 70182 Stuttgart (DE); KROEPKE, Karsten, 71636 Ludwigsburg (DE); KUFFERATH, Andreas, 71706 Markgroeningen (DE)
(86) Internationale Anmeldenummer: PCT/DE2002/004452
(87) Internationale Veröffentlichungsnummer: WO 2003/067062

(56) Entgegenhaltungen:
- EP-A- 0 856 655
- EP-A- 0 982 489
- EP-A- 1 081 364
- EP-A- 1 083 327

## Beschreibung

### Stand der Technik

Die Erfindung betrifft zunächst ein Verfahren zum Betreiben einer Brennkraftmaschine nach dem Oberbegriff der nebengeordneten Ansprüche 1 und 2.

Ein solches Verfahren ist vom Markt her bekannt. Bei diesem wird der Kraftstoff von Kraftstoffpumpen unter hohem Druck in eine Kraftstoff-Sammelleitung ("Rail") gefördert. An die Kraftstoff-Sammelleitung sind Injektoren angeschlossen, welche den Kraftstoff direkt in einen dem jeweiligen Injektor zugeordneten Brennraum einspritzen. Auf diese Weise kann in bestimmten Betriebszuständen der Brennkraftmaschine im Brennraum ein sog. "geschichtetes" Kraftstoff-Luft-Gemisch erzeugt werden. Dieses kann insgesamt magerer sein als ein homogen verteiltes Kraftstoff-Luft-Gemisch, so dass eine derartig betriebene Brennkraftmaschine vergleichsweise wenig Kraftstoff verbraucht.

Beim Betrieb einer solchen Brennkraftmaschine ergibt sich bei kalter Brennkraftmaschine das Problem, dass ein Teil des Kraftstoffes an den kalten Brennraumwänden kondensiert oder direkt als Flüssigkeit an der Wand abgeschieden wird. Ohne entsprechende Gegenmaßnahmen wäre daher beispielsweise beim Starten einer kalten Brennkraftmaschine das im Brennraum vorhandene Kraftstoff-Luft-Gemisch so mager, dass es nicht zünden könnte.

Dem wird dadurch begegnet, dass grundsätzlich bei kalter Brennkraftmaschine mehr Kraftstoff in den Brennraum der Brennkraftmaschine eingespritzt wird als an sich im Normalbetrieb zur Bildung eines zünd- und brennfähigen Kraftstoff-Luft-Gemisches erforderlich ist. Die bei kalter Brennkraftmaschine in den Brennraum der Brennkraftmaschine gelangende Kraftstoffmenge kann auf diese Weise leicht das 5-bis 30-fache der im Normalbetrieb erforderlichen Kraftstoffmenge betragen.

Dieser überschüssige und an den Brennraumwänden kondensierende oder direkt als Flüssigkeit abgeschiedene Kraftstoff wird zum großen Teil unverbrannt in das Abgassystem der Brennkraftmaschine ausgestoßen. Bei einem derartigen Betrieb der Brennkraftmaschine werden sehr hohe HC-Emissionen erzeugt. Diese hohen HC-Emissionen während der Start-, Nachstart- und Warmlaufphase tragen wesentlich zu den gesamten Abgasemissionen beim Betrieb der Brennkraftmaschine bei. Eine Verringerung dieser Emissionen kann also die Gesamtemissionen der Brennkraftmaschine deutlich verringern. Gleichzeitig trägt die eingebrachte Mehrmenge zu einem erhöhten Kraftstoffverbrauch in der Kaltstartphase bei.

Aus der EP 1 006 265 A1 ist eine Brennkraftmaschine bekannt, welche im Schichtbetrieb gestartet werden kann. Dies bedeutet, dass nur im Bereich der Zündkerze ein zünd- und brennfähiges Gemisch vorliegt, wohingegen im übrigen Brennraum, insbesondere auch in der Nähe der kalten Zylinderwände, ein extrem mageres Gemisch oder sogar nur reine Luft vorliegt. Auf diese Weise können während der Startphase der Brennkraftmaschine schädliche Abgasemissionen reduziert werden.

Um eine Brennkraftmaschine im Schichtbetrieb zu starten, muss bei der Ladungsschichtung eine scharf von der umgebenden Luft abgetrennte Gemischwolke entstehen. Dafür ist bspw. ein ganz spezieller Injektor notwendig. Dieser ist jedoch aufwändig und teuer und kann nicht nachgerüstet werden.

Ein zusätzliches Problem tritt vor allem dann auf, wenn eine kalte Brennkraftmaschine nach einem Start nur sehr kurz betrieben oder aus sonstigen Gründen nicht warm wird. Beim nächsten Starten der Brennkraftmaschine kann es dann vor allem bei sehr kalten Temperaturen (<0°) aufgrund der hohen eingespritzten Kraftstoffmengen zum sogenannten "Spark-Fouling" kommen. Hierunter versteht man, dass die Zündkerze eines Brennraums der Brennkraftmaschine wie auch der gesamte Brennraum durch die große eingebrachte Kraftstoffmenge so feucht wird, dass Zündprobleme auftreten und im schlimmsten Fall ein gesicherter Start der Brennkraftmaschine nicht mehr möglich ist.

Die EP 1 081 364 A1 offenbart, nach dem Starten der Brennkraftmaschine, wenn eine Kolbentemperatur einen bestimmten Grenzwert erreicht, von einer Homogen- auf eine Schichteinspritzung umzuschalten. Aus der EP 0 856 655 A2 ist bekannt, nach der Startphase eine Homogen-Split-Einspritzung durchzuführen. Die EP 0 982 489 A2 beschreibt während der Startphase eine Homogeneinspritzung während des Saughubs.

Aufgabe der vorliegenden Erfindung ist es daher, ein Verfahren der eingangs genannten Art so weiterzubilden, dass mit ihm der Kraftstoffverbrauch und die Abgasemissionen während der Start- und/oder Warmlaufphase der Brennkraftmaschine auf preiswerte Art und Weise reduziert werden können und dass die Brennkraftmaschine immer zuverlässig startet.

Diese Aufgabe wird durch die Verfahren und Vorrichtungen mit den Merkmalen der nebengeordneten Patentansprüche gelöst.

### Vorteile der Erfindung

Das erfindungsgemäße Verfahren hat den Vorteil, dass die mit ihm betriebene Brennkraftmaschine bei kalter Brennkraftmaschine, vor allem während der Startphase nur einen kleinen Überschuss an Kraftstoff benötigt und daher weniger Kraftstoff verbraucht und weniger schädliche Emissionen verursacht als dies bisher möglich war. Dadurch, dass insgesamt weniger Kraftstoff in den Brennraum eingebracht wird, wird auch die Zündkerze weniger feucht, was das Risiko von "Spark Fouling" vermindert und einen zuverlässigen Wiederstart nach nur kurzer Betriebszeit ermöglicht. Darüber hinaus kann das erfindungsgemäße Verfahren bei vielen Arten von Brennkraftmaschinen mit Kraftstoff-Direkteinspritzung angewendet werden, da seine Funktion in weiten Grenzen unabhängig von der speziellen Ausgestaltung des Brennraums oder von der Ausgestaltung des Injektors ist.

Die Vorteile werden unter anderem dadurch erzielt, dass bei kalter Brennkraftmaschine, beispielsweise während des Starts der Brennkraftmaschine (üblicherweise die ersten paar Umdrehungen einer Kurbelwelle) die Kraftstoffeinspritzung innerhalb eines Arbeitszyklus in mindestens zwei zeitlich voneinander beabstandete EinzelEinspritzungen aufgeteilt wird.

Der Begriff "Arbeitszyklus" ist auf einen Brennraum der Brennkraftmaschine bezogen. Im Falle einer 4-Takt-Brennkraftmaschine umfasst ein Arbeitszyklus alle vier Takte, also volle zwei Kurbelwellenumdrehungen. Die erste Einspritzung erfolgt so, dass ein im Wesentlichen homogenes, gerade noch brennbares Kraftstoff-Luft-Gemisch im Brennraum erzeugt wird. Ein fettes und auch bei kalter Brennkraftmaschine gut zündfähiges Kraftstoff-Luft-Gemisch wird nur bei der zweiten Einspritzung und nur im Bereich der Zündeinrichtung erzeugt.

Daher kann das bei der ersten Einspritzung erzeugte homogene Grundgemisch weniger fett sein als dies bisher üblich war. In der Folge kann auch nur vergleichsweise wenig Kraftstoff an den Wänden des Brennraums kondensieren oder direkt als Flüssigkeit abgeschieden werden, so dass die sog. "Wandverluste" vergleichsweise gering ausfallen und die Zündkerze weniger feucht wird. Die zusätzliche Kraftstoffmenge, welche während dieser Phasen in den Brennraum der Brennkraftmaschine eingespritzt wird, kann somit reduziert werden, was den Kraftstoffverbrauch senkt. Schon allein hierdurch wird der Anteil des unverbrannten Kraftstoffes, welcher in das Abgassystem gelangt, verringert, was wiederum zu einer Reduktion der HC-Emissionen während der Startphase der Brennkraftmaschine führt.

Gegenüber einem üblichen geschichteten Kraftstoff-Luftgemisch im Brennraum der Brennkraftmaschine hat das erfindungsgemäße Verfahren den Vorteil, dass im gesamten Brennraum ein brennbares Gemisch vorliegt. Dadurch kann, nach erfolgter Zündung des im Bereich der Zündeinrichtung vorliegenden fetten Kraftstoff-Luft-Gemisches, das gesamte im Brennraum der Brennkraftmaschine vorhandene Kraftstoff-Luft-Gemisch durchbrennen. Dies führt nochmals zu einer erheblichen Reduktion der HC-Reduktionen während dieser Betriebsphase der Brennkraftmaschine und zu einer schnelleren Erwärmung des Brennraums, als das beim oben erwähnten Schichtstart der Fall wäre.

Aufgrund der Tatsache, dass während der Startphase im Bereich der Zündeinrichtung ein fettes Kraftstoff-Luft-Gemisch vorhanden ist (dieses wird ja durch die zweite Einspritzung erzeugt), wird dabei eine sehr gute Start- und Kaltlauffähigkeit der Brennkraftmaschine, gewährleistet.

Wird das erfindungsgemäße Verfahren durchgeführt, so kann beispielsweise zusätzlich bei kalter Temperatur der Brennkraftmaschine der Zündwinkel nach spät verschoben werden, da die Entzündbarkeit des Gemisches auch bei tiefer Temperatur der Brennkraftmaschine gewährleistet ist. Der durch einen späten Zündwinkel verursachte schlechte mechanische Wirkungsgrad beschleunigt die Aufheizung des Brennraums und verbessert so die Sicherheit bei wiederholten Kaltstarts. Dadurch, dass die Wahrscheinlichkeit von Zündaussetzern bzw. verschleppter Verbrennung verringert ist, läuft die kalte Brennkraftmaschine ruhiger und somit komfortabler.

Vorteilhafte Weiterbildungen der Erfindung sind in Unteransprüchen angegeben.

So wird beispielsweise ein Verfahren beansprucht, bei dem eine Temperatur der Brennkraftmaschine, insbesondere eine Kühlmittel-, Zylinderkopf-, oder Schmiermitteltemperatur, erfasst und die Einspritzung in eine erste und in eine zweite Einspritzung nur dann aufgeteilt wird, wenn die erfasste Temperatur unterhalb eines bestimmten Werts liegt. Somit wird die aufgeteilte Einspritzung auf jene Fälle beschränkt, in denen sie zur Vermeidung der Start- und Emissionsprobleme erforderlich ist. Bei warmer Brennkraftmaschine dagegen können entsprechende andere für diesen Fall optimale Verfahren verwendet werden (beispielsweise reiner Homogenbetrieb). Der Denkbar ist auch, dass die Einspritzung nur dann in eine erste und in eine zweite Einspritzung aufgeteilt wird, wenn die erfasste Temperatur innerhalb eines nach oben und nach unten abgegrenzten Bereichs liegt.

Ferner kann vorgesehen sein, dass die Einspritzung in eine erste und in eine zweite Einspritzung nur dann aufgeteilt wird, wenn eine erfasste Drehzahl einer Kurbelwelle der Brennkraftmaschine unterhalb eines bestimmten Werts oder innerhalb bestimmter Grenzen liegt.

Bei einer besonders vorteilhaften Ausgestaltung des erfindungsgemäßen Verfahrens ist das Kraftstoff-Luft-Gemisch, welches bei der ersten Einspritzung erzeugt wird, homogen-mager und hat insbesondere einen Lambdawert im Bereich von ungefähr 1,5 bis 4. Dem liegt der Gedanke zugrunde, dass bei der ersten Einspritzung nur so viel Kraftstoff in den Brennraum eingespritzt werden muss, dass die durch diese Einspritzung im Brennraum erzeugte homogene Kraftstoff-Luft-Gemischwolke gerade noch brennbar ist, also ein sicheres Durchbrennen gewährleistet ist. Eine Zündfähigkeit ist in diesem Bereich nicht erforderlich, da die Zündung ja durch die Gemischwolke sichergestellt wird, welche durch die zweite Einspritzung eingebracht wird. Ein homogen-mageres Grundgemisch ermöglicht es, die Brennkraftmaschine mit einem insgesamt, also auch unter Berücksichtigung der im Bereich der Zündeinrichtung vorliegenden Gemischwolke, um den stöchiometrischen Punkt liegenden Gemisch zu starten. Der Kraftstoffverbrauch bei einer solchermaßen betriebenen Brennkraftmaschine ist somit vergleichsweise gering, bei insgesamt niedrigen Emissionen.

Ferner wird vorgeschlagen, dass das Kraftstoff-Luft-Gemisch, welches bei der zweiten Einspritzung im Bereich der Zündeinrichtung erzeugt wird, wenigstens beim ersten Arbeitszyklus einen Lambdawert im Bereich von 0,70 - 0,95 im Gemisch hat. Ein derartiges Kraftstoff-Luft-Gemisch zündet zuverlässig.

Vorgeschlagen wird auch, dass die Kraftstoffmenge, welche während der Startphase der Brennkraftmaschine bei der ersten Einspritzung und/oder bei der zweiten Einspritzung in den Brennraum eingespritzt wird, von der Anzahl der bereits erfolgten Arbeitszyklen abhängt. Durch diese Weiterbildung des erfindungsgemäßen Verfahrens wird der Tatsache Rechnung getragen, dass es während der Startphase der Brennkraftmaschine sehr schnell zu einer Erwärmung der Brennraumwände und daher zu einer Verringerung der Wandverluste kommt.

Aufgrund der Erwärmung sonstiger Bauteile der Brennkraftmaschine erhöht sich auch sehr schnell die Temperatur des sich im Brennraum befindenden Kraftstoff-Luft-Gemisches zum Zündzeitpunkt. Die Einspritzung an sich überschüssigen Kraftstoffes, welche erforderlich ist, um die gewünschten Zusammensetzungen der Kraftstoff-LuftGemische zu erreichen, kann somit sehr schnell reduziert werden.

Bei einer speziellen Ausgestaltung des erfindungsgemäßen Verfahrens wird vorgeschlagen, dass die erste Einspritzung zu Beginn eines Ansaugtaktes und die zweite Einspritzung gegen Ende eines Kompressionstaktes eines Arbeitszyklus erfolgt. Ein Zeitpunkt zu Beginn eines Ansaugtaktes für die erste Einspritzung erleichtert die Bildung eines homogenen Grundgemisches. Umgekehrt ermöglicht die zweite Einspritzung erst gegen Ende des Kompressionstaktes die Bildung einer relativ kleinen Gemischwolke im Bereich der Zündeinrichtung. Bevorzugt erfolgt die zweite Einspritzung bei einem Kurbelwellenwinkel von ungefähr 80° bis 30° vor der Zündung.

Bei einer Ausgestaltung der Erfindung wird die geteilte Einspritzung nur dann durchgeführt, wenn der Druck in einem. Kraftstoffsystem, welches den Kraftstoff bereitstellt, mindestens einen bestimmten Wert erreicht. Hierdurch wird berücksichtigt, dass bei manchen Common-Rail-Systemen, die bei Kraftstoff-Direkteinspritzung verwendet werden, der Druck im Rail während des Stillstands der Brennkraftmaschine beispielsweise aus Sicherheitsgründen abgesenkt wird. Beim Starten steht dann nur ein geringer Kraftstoffdruck zur Verfügung, der nur eine übliche Homogeneinspritzung des Kraftstoffes gestattet. Sobald aber genügend Kraftstoffdruck vorhanden ist, kann zur aufgeteilten Einspritzung übergegangen werden.

Nach dem Ende der Startphase kann wieder auf ein übliches Betriebsverfahren für die Brennkraftmaschine umgeschaltet werden. Daher wird auch vorgeschlagen, dass nach einer bestimmten Anzahl von Arbeitszyklen und/oder bei Erreichen einer bestimmten Betriebstemperatur nur noch eine Einspritzung pro Arbeitszyklus erfolgt. Typischerweise erfolgt eine solche Umschaltung bspw. nach zwei bis vier Arbeitszyklen je Zylinder, oder sobald nur noch eine geringe Anreicherung notwendig ist.

Eine Weiterbildung betrifft ein Verfahren, bei dem die Gesamt-Zusammensetzung des Kraftstoff-Luftgemisches, der Raildruck, die Einspritzzeitpunkte, und/oder die einzuspritzende Kraftstoffmenge von den aktuellen Betriebsbedingungen, wie Temperatur der Brennkraftmaschine, Last, Drehzahl, abhängt bzw. abhängen. Dies ermöglicht eine nochmalige Optimierung des Emissionsverhaltens, des Kraftstoffverbrauchs und des Wiederhol-Startverhaltens.

### Zeichnung

Nachfolgend wird ein besonders bevorzugtes Ausführungsbeispiel der Erfindung unter Bezugnahme auf die beiliegende Zeichnung im Detail erläutert. In der Zeichnung zeigen:
- Figur 1: eine Prinzipdarstellung einer Brennkraftmaschine;
- Figur 2: einen teilweisen Schnitt durch einen Brennraum der Brennkraftmaschine von Fig. 1 nach einer ersten Einspritzung von Kraftstoff;
- Figur 3: eine Darstellung ähnlich Fig. 2 nach einer zweiten Einspritzung von Kraftstoff; und
- Figur 4: ein Diagramm, in dem die Zeiträume der Einspritzungen der Fign. 2 und 3 sowie der Öffnungszeitraum eines Einlassventils der Brennkraftmaschine über dem Winkel einer Kurbelwelle dargestellt sind.

### Beschreibung des Ausführungsbeispiels

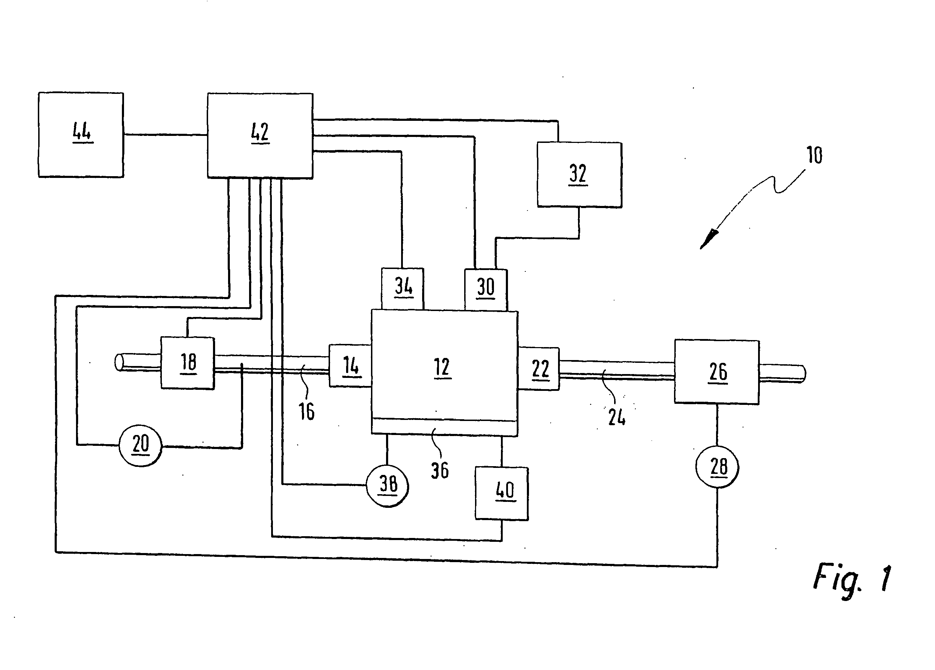

In Fig. 1 trägt eine Brennkraftmaschine insgesamt das Bezugszeichen 10. Sie umfasst mehrere Brennräume, von denen in Fig. 1 nur einer mit dem Bezugszeichen 12 dargestellt ist. Die Verbrennungsluft wird dem Brennraum 12 über ein Einlassventil 14 aus einem Ansaugrohr 16 zugeführt. In letzterem ist eine Drosselklappe 18 angeordnet. Die durch das Ansaugrohr 16 strömende Luftmasse wird von einem Heißfilm-Luftmassenmesser ("HFM-Sensor" genannt) erfasst (auch ein Drucksensor kann zur Erfassung der Luftmasse verwendet werden). Er trägt das Bezugszeichen 20. Die heißen Verbrennungsabgase werden aus dem Brennraum 12 über ein Auslassventil 22 in ein Abgasrohr 24 abgeleitet. In diesem ist ein Katalysator 26 mit einer Lambdasonde 28 angeordnet.

Der Kraftstoff gelangt in den Brennraum 12 über einen direkt am Brennraum 12 angeordneten Injektor 30. Dieser ist an ein Kraftstoffsystem 32 angeschlossen. Auch wenn dies in Fig. 1 nicht dargestellt ist, umfasst das Kraftstoffsystem 32 eine Niederdruck-Vorförder- und eine Hochdruck-Hauptförderpumpe, welche den Kraftstoff aus einem Vorratsbehälter in eine Kraftstoff-Sammelleitung ("Rail" genannt) fördern. Der Injektor 30 ist wiederum an die Kraftstoff-Sammelleitung angeschlossen. Die Entzündung eines im Brennraum 12 vorhandenen Kraftstoff-Luft-Gemisches erfolgt durch eine Zündkerze 34.

Die Drehzahl einer Kurbelwelle 36 wird von einem Drehzahlsensor 38 erfasst. Ein Anlasser 40 kann zum Starten der Brennkraftmaschine 10 die Kurbelwelle 36 in Drehung versetzen.

Der Betrieb der Brennkraftmaschine 10 wird von einem Steuer- und Regelgerät 42 gesteuert bzw. geregelt. Dieses erhält Signale vom HFM-Sensor 20, vom Drehzahlsensor 38 und von der Lambdasonde 28. Außerdem ist das Steuer- und Regelgerät 42 mit einem Zündschalter 44 verbunden. Ausgangsseitig ist das Steuer- und Regelgerät 42 mit der Drosselklappe 18, mit der Zündkerze 34 und mit dem Injektor 30 verbunden. Auch der Anlasser 40 wird vom Steuer- und Regelgerät 42 angesteuert. Eine Verbindung besteht auch zwischen dem Kraftstoffsystem 32 und dem Steuer- und Regelgerät 42.

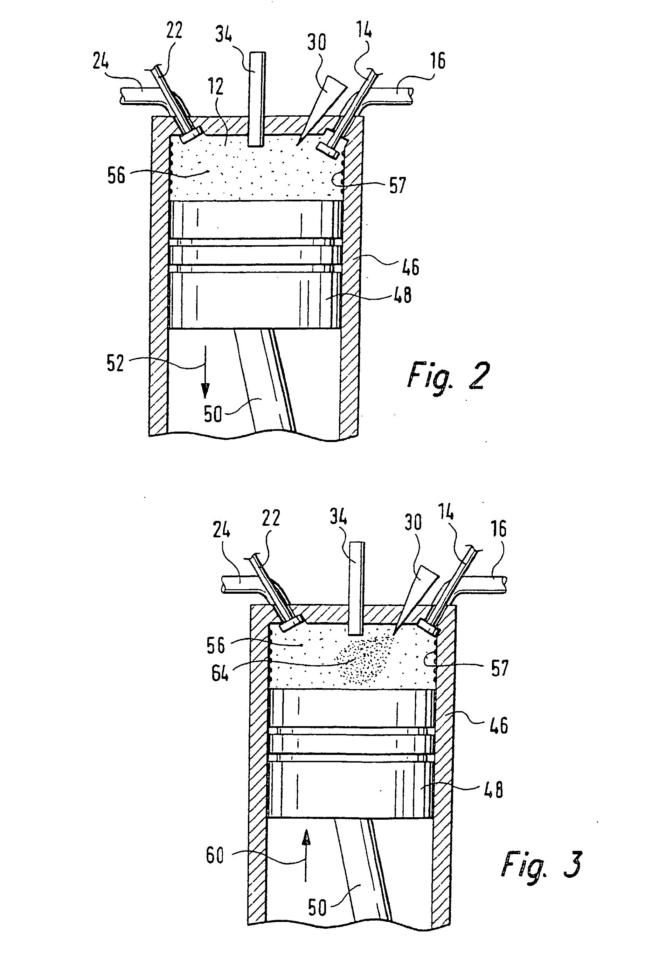

Der Startvorgang der Brennkraftmaschine 10 wird nun unter Bezugnahme auf die Fign. 2 - 4 erläutert:

In den Fign. 2. und 3 ist ein Zylindergehäuse 46 dargestellt, in dem ein Kolben 48 beweglich aufgenommen ist. Über ein Pleuel 50 ist der Kolben 48 mit der in den Fign. 2 und 3 nicht sichtbaren Kurbelwelle 36 verbunden. Der Brennraum 12 ist zwischen dem Kolben 48 und dem Zylindergehäuse 46 gebildet. Dargestellt sind in den Fign. 2 und 3 ferner das Einlassventil 14, das Auslassventil 22, die Zündkerze 34, der Injektor 30 sowie das Ansaugrohr 16 und das Abgasrohr 24.

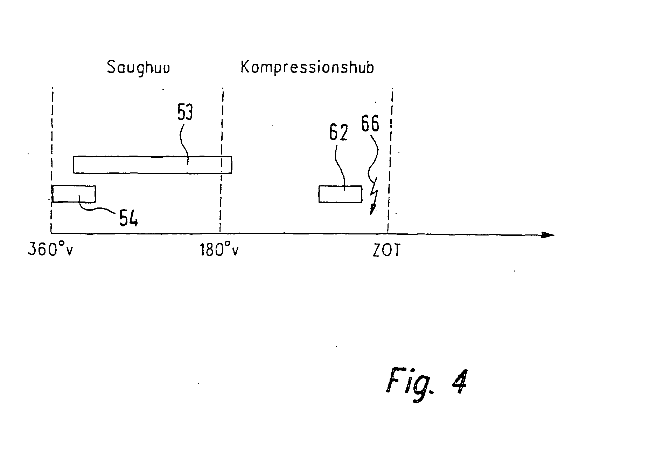

Um die Brennkraftmaschine 12 zu starten (ein entsprechendes Signal erhält das Steuergerät 42 vom Zündschalter 44), wird der Anlasser 40 betätigt und hierdurch die Kurbelwelle 36 in Bewegung versetzt. Während eines Saughubs (vgl. Fig. 4) bewegt sich der Kolben 48 im Zylindergehäuse 46 in Fig. 2 nach unten (Pfeil 52 in Fig. 2). Das Einlassventil 14 ist geöffnet (Bezugszeichen 53 in Fig. 4). Zu Beginn dieses Saughubs erfolgt eine erste Einspritzung von Kraftstoff durch den Injektor 30 in den Brennraum 12. Der Zeitraum dieser Einspritzung trägt in Fig. 4 das Bezugszeichen 54. Durch diese Einspritzung wird im Brennraum 12 ein insgesamt im Wesentlichen homogenes Kraftstoff-Luft-Gemisch 56 erzeugt.

Bei dieser ersten Einspritzung kondensiert an dem noch kalten Zylindergehäuse 46 und am Kolben 44 eine relativ große Menge an Kraftstoff (Bezugszeichen 57). Ein Teil des Kraftstoffs kann auch direkt an der Wand abgeschieden werden. Um dies zu kompensieren wird insgesamt vom Injektor 30 bei dieser ersten Einspritzung mehr Kraftstoff in den Brennraum 12 eingespritzt als im Normalfall, also bei warmem Zylindergehäuse 46 und Kolben 44, erforderlich wäre.

Nach dem Passieren des unteren Totpunktes bewegt sich der Kolben 48 wieder nach oben (Pfeil 60 in Fig. 3). Das Einlassventil 14 ist nun ebenso wie das Auslassventil 22 geschlossen. Gegen Ende dieses Kompressionshubs (vgl. Fig. 4) erfolgt eine zweite Einspritzung von Kraftstoff durch den Injektor 30. Durch diese Einspritzung (Bezugszeichen 62 in Fig. 4) wird im Bereich der Zündkerze 34 eine Kraftstoffwolke 64 erzeugt, durch die im Bereich der Zündkerze 34 ein im Wesentlichen fettes Kraftstoff-Luft-Gemisch entsteht. Das bei der ersten Einspritzung 54 im Brennraum 12 erzeugte homogen-magere Kraftstoff-Luft-Gemisch 56 hat einen Lambdawert im Bereich von ungefähr 1,5 bis 4. Das durch die zweite Einspritzung 62 im Bereich der Zündeinrichtung 34 erzeugte fette Kraftstoff-Luft-Gemisch 64 hat bei diesem ersten Arbeitszyklus des Kolbens 48 einen Lambdawert im Bereich von ungefähr 0,75 bis 0,9.

Kurz bevor der Kolben 48 den oberen Totpunkt erreicht, wird die Zündkerze 34 gezündet (Bezugszeichen 66 in Fig. 4). Dadurch wird das im Bereich der Zündkerze 34 vorhandene fette Kraftstoff-Luft-Gemisch 64 entflammt (in einem nicht dargestellten Ausführungsbeispiel erfolgt die Zündung erst nach dem oberen Totpunkt). Aufgrund des vorhergehenden Druck- und Temperaturanstiegs ist die Flammausbreitung besser und das Durchbrennen sauberer. Dies schlägt auf das ebenfalls im Brennraum 12 vorhandene homogene Gemisch 56 über, so dass dieses vollständig durchbrennen kann.

Da das im Brennraum 12 vorhandene "Grundgemisch" 56 im Vergleich zur ungeteilten Einspritzung mager ist, kondensiert insgesamt nur wenig Kraftstoff 57 an der Innenwand des Zylindergehäuses 46. Die sog. "Wandverluste" sind daher vergleichsweise gering. Da bei dem in den Fign. 2 - 4 beschriebenen Verfahren nur im Bereich der Zündkerze 34 ein fettes Kraftstoff-Luft-Gemisch 64 vorliegt, wohingegen im übrigen Brennraum 12 ein homogen-mageres Kraftstoff-Luft-Gemisch 56 vorliegt, ist das Gesamtlambda des Gesamt-Kraftstoff-Luft-Gemisches im Brennraum 12 magerer als bei ungeteilter Einspritzung.

Das in den Fign. 2 - 4 dargestellte Verfahren, bei dem zu Beginn eines Saughubs eine erste Einspritzung 54 und gegen Ende eines Kompressionshubs eine zweite Einspritzung 62. erfolgt, wird bei dem vorliegenden Ausführungsbeispiel für die ersten vier Arbeitszyklen während der Startphase der Brennkraftmaschine 10 durchgeführt. Die Anzahl der Startzyklen wird dabei über den Drehzahlsensor 38 festgestellt.

Da aufgrund der geringen Drehzahl und der entsprechend geringen Luftgeschwindigkeit eine präzise Erfassung der in den Brennraum 12 gelangenden Luftmenge über den HFM-Sensor 20 nicht möglich ist, wird die während der Startphase, also während der ersten vier Arbeitszyklen, der Brennkraftmaschine vom Injektor 30 in den Brennraum 12 einzuspritzende Kraftstoffmasse vorgesteuert. So kann sie bspw. aus einem Kennfeld abhängig von einer Temperatur der Brennkraftmaschine 10 und abhängig von der laufenden Nummer des Arbeitszyklus der Brennkraftmaschine 10 bestimmt werden.

Um das Auskondensieren bzw. Niederschlagen des Kraftstoffes 57 an der kalten Wand des Zylindergehäuses 46 und des Kolbens 44 zu kompensieren, wird während der Startphase der Brennkraftmaschine 10 eine überschüssige Menge von Kraftstoff vom Injektor 30 in den Brennraum 12 eingespritzt. Ansonsten könnte die gewünschte Zusammensetzung insbesondere des homogen-mageren Kraftstoff-Luft-Gemisches 56, welches aus der ersten Einspritzung 54 hervorgeht, nicht erreicht werden.

Da sich jedoch bereits nach der ersten Verbrennung im Brennraum 12 die Temperatur des Zylindergehäuses 46 und des Kolbens 44 deutlich erhöht, wird die Menge des überschüssigen Kraftstoffes, welcher während des zweiten Arbeitszyklus des betreffenden Zylinders der Brennkraftmaschine 10 vom Injektor 30 in den Brennraum 12 eingespritzt wird, gegenüber dem ersten Arbeitszyklus reduziert. Eine weitere Reduktion erfolgt vom zweiten zum dritten und vom dritten zum vierten Arbeitszyklus. Im vorliegenden Ausführungsbeispiel nach dem vierten Arbeitszyklus des Kolbens 48 ist die Startphase der Brennkraftmaschine 10 abgeschlossen und es erfolgt dann nur noch eine Einspritzung pro Arbeitszyklus. Bei sehr tiefen Temperaturen der Brennkraftmaschine kann ein Betrieb mit aufgeteilter Einspritzung bis zum Erreichen einer bestimmten Temperatur Vorteile bringen, da dann die Anfettung geringer ist.

Der für die Einspritzungen 54 und 62 notwendige Kraftstoffdruck wird durch eine entsprechende Ansteuerung des Kraftstoffsystems (beispielsweise Vorlauf einer elektrischen Kraftstoffpumpe oder Ansteuerung eines Druckspeichers) erreicht. Bei kurzen Abstellzeiten kann auch der noch vorhandene Druck im Kraftstoffsystem ausgenutzt werden.

Alternativ kann auch erst nach dem Hochlaufen der Brennkraftmaschine auf die geteilte Einspritzung umgeschaltet werden, sobald ein ausreichender Kraftstoffdruck bereitgestellt werden kann. Dieses Vorgehen bietet vor allem bei sehr kalten Starttemperaturen noch Vorteile, da hier auch noch längere Zeit nach dem Hochlaufen der Brennkraftmaschine eine sehr große Anreicherung notwendig wäre. Diese kann durch die geteilte Einspritzung verringert werden.

Da bei sehr kalten Brennraumtemperaturen vergleichsweise viel Kraftstoff an der Wand des Brennraums und am Kolben auskondensiert, ist in diesen Fällen denkbar, während der ersten Verbrennungen nur eine einfache Einspritzung abzusetzen. Es wird dann beispielsweise nach der zweiten oder dritten Verbrennung jedes Zylinders auf eine geteilte Einspritzung umgeschaltet.

## Patentansprüche

1. Verfahren zum Betreiben einer Brennkraftmaschine (10), bei dem Kraftstoff direkt in einen Brennraum (12) der Brennkraftmaschine (10) eingespritzt und ein im Brennraum (12) vorhandenes Kraftstoff-Luftgemisch (64) von einer Zündeinrichtung (34) entzündet wird, **dadurch gekennzeichnet, dass** bei kalter Brennkraftmaschine (10) während einer Startphase, bei den ersten paar Umdrehungen einer Kurbelwelle, pro Arbeitszyklus mindestens eine erste Einspritzung (54) erfolgt, mit der insgesamt im Brennraum (12) ein im Wesentlichen homogenes, brennbares Kraftstoff-Luftgemisch (56) erzeugt wird, dass danach im gleichen Arbeitszyklus mindestens eine zweite Einspritzung (62) erfolgt, mit der im Bereich der Zündeinrichtung (34) ein im Wesentlichen fettes Kraftstoff-Luftgemisch (64) erzeugt wird, und dass der Lambdawert des durch die zweite Einspritzung (62) im Bereich der Zündeinrichtung (34) erzeugten Kraftstoff-Luftgemisches (64) kleiner ist als der Lambdawert des im übrigen Brennraum (12) vorhandenen Kraftstoff-Luftgemisches (56).

2. Verfahren zum Betreiben einer Brennkraftmaschine (10), bei dem Kraftstoff direkt in einen Brennraum (12) der Brennkraftmaschine (10) eingespritzt und ein im Brennraum (12) vorhandenes Kraftstoff-Luftgemisch (64) von einer Zündeinrichtung (34) entzündet wird, wobei bei kalter Brennkraftmaschine (10) während der Startphase pro Arbeitszyklus mindestens eine erste Einspritzung (54) erfolgt, mit der insgesamt im Brennraum (12) ein im Wesentlichen homogenes, brennbares Kraftstoff-Luftgemisch (56) erzeugt wird, und danach im gleichen Arbeitszyklus mindestens eine zweite Einspritzung (62) erfolgt, mit der im Bereich der Zündeinrichtung (34) ein im Wesentlichen fettes Kraftstoff-Luftgemisch (64) erzeugt wird, wobei der Lambdawert des durch die zweite Einspritzung (62) im Bereich der Zündeinrichtung (34) erzeugten Kraftstoff-Luftgemisches (64) kleiner ist als der Lambdawert des im übrigen Brennraum (12) vorhandenen Kraftstoff-Luftgemisches (56), und wobei in den ersten Arbeitszyklen noch eine einfache Einspritzung durchgeführt wird **dadurch gekennzeichnet, dass** erst dann die Einspritzung in eine erste und in eine zweite Einspritzung aufgeteilt wird, wobei die Anzahl dieser ersten Arbeitszyklen aus der Temperatur der Brennkraftmaschine zum Startzeitpunkt bestimmt wird.

3. Verfahren nach einem der Ansprüche 1 oder 2, **dadurch gekennzeichnet, dass** eine Temperatur der Brennkraftmaschine, insbesondere eine Kühlmittel-, Zylinderkopf-, oder Schmiermitteltemperatur, erfasst und die Einspritzung in eine erste und in eine zweite Einspritzung nur dann aufgeteilt wird, wenn die erfasste Temperatur unterhalb eines bestimmten Werts liegt.

4. Verfahren nach einem der vorhergehenden Ansprüche, **dadurch gekennzeichnet, dass** die Einspritzung in eine erste und in eine zweite Einspritzung nur dann aufgeteilt wird, wenn eine erfasste Drehzahl einer Kurbelwelle der Brennkraftmaschine unterhalb eines bestimmten Werts oder innerhalb bestimmter Grenzen liegt.

5. verfahren nach einem der vorhergehenden Ansprüche, **dadurch gekennzeichnet, dass** das Kraftstoff-Luftgemisch (56), welches bei der ersten Einspritzung (54) erzeugt wird, homogen-mager ist, insbesondere einen Lambdawert im Bereich von ungefähr 1,5 bis 4 hat.

6. Verfahren nach einem der vorhergehenden Ansprüche, **dadurch gekennzeichnet, dass** das Kraftstoff-Luftgemisch (64), welches bei der zweiten Einspritzung (62) im Bereich der Zündeinrichtung (34) erzeugt wird, wenigstens beim ersten Arbeitszyklus einen Lambdawert im Bereich von ungefähr 0,7 bis 0,95 hat.

7. Verfahren nach einem der vorhergehenden Ansprüche, **dadurch gekennzeichnet, dass** die Kraftstoffmenge, welche bei kalter Brennkraftmaschine (10) und/oder während der Startphase der Brennkraftmaschine (10) bei der ersten Einspritzung (54) und/oder bei der zweiten Einspritzung (62) in den Brennraum (12) eingespritzt wird, von der Anzahl der bereits erfolgten Arbeitszyklen abhängt.

8. Verfahren nach einem der vorhergehenden Ansprüche, **dadurch gekennzeichnet, dass** die erste Einspritzung (54) zu Beginn eines Ansaugtaktes und die zweite Einspritzung (62) gegen Ende eines Kompressionstaktes eines Arbeitszyklus erfolgt.

9. Verfahren nach einem der vorhergehenden Ansprüche, **dadurch gekennzeichnet, dass** die geteilte Einspritzung nur dann durchgeführt wird, wenn der Druck in einem Kraftstoffsystem (32), welches den Kraftstoff bereitstellt, mindestens einen bestimmten Wert erreicht.

10. Verfahren nach einem der vorhergehenden Ansprüche, **dadurch gekennzeichnet, dass** nach einer bestimmten Anzahl von Arbeitszyklen und/oder bei Erreichen einer bestimmten Betriebstemperatur nur noch eine Einspritzung pro Arbeitszyklus erfolgt.

11. Verfahren nach einem der vorhergehenden Ansprüche, **dadurch gekennzeichnet, dass** die Gesamt-Zusammensetzung des Kraftstoff-Luftgemisches, der Raildruck, die Einspritzzeitpunkte, und/oder die einzuspritzende Kraftstoffmenge von den aktuellen Betriebsbedingungen, wie Temperatur der Brennkraftmaschine, Last, Drehzahl, abhängt bzw. abhängen.

12. Computerprogramm, **dadurch gekennzeichnet, dass** es zur Anwendung des Verfahrens nach einem der vorhergehenden Ansprüche programmiert ist.

13. Elektrisches Speichermedium für eine Steuer- und/oder Regeleinrichtung einer Brennkraftmaschine, **dadurch gekennzeichnet, dass** auf ihm ein Computerprogramm nach Anspruch 12 abgespeichert ist.

14. Steuer- und/oder Regelgerät (42) zum Betreiben einer Brennkraftmaschine (10), **dadurch gekennzeichnet, dass** es zur Anwendung des Verfahrens nach einem der Ansprüche 1 bis 11 programmiert ist.

15. Brennkraftmaschine (10), mit einem Brennraum (12), mit einer Kraftstoff-Einspritzvorrichtung (30), welche den Kraftstoff direkt in den Brennraum (12) einspritzt, und mit einer Zündeinrichtung (34), welche ein im Brennraum (12) vorhandenes Kraftstoff-Luftgemisch (64) entzündet, **dadurch gekennzeichnet, dass** sie ein Steuer- und/oder Regelgerät (42) nach Anspruch 14 umfasst.

## Claims

1. Method for operating an internal combustion engine (10), in which fuel is injected directly into a combustion chamber (12) of the internal combustion engine (10) and a fuel/air mix (64) which is present in the combustion chamber (12) is ignited by an ignition device (34), **characterized in that** when the internal combustion engine (10) is cold during a starting phase, during the first few revolutions of a crankshaft, at least one first injection (54), by which overall a substantially homogenous, combustible, fuel/air mix (56) is produced in the combustion chamber (12), takes place per working cycle, **in that** then at least one second injection (62), by which a substantially rich fuel/air mix (64) is produced in the region of the ignition device (34), takes place in the same working cycle, and **in that** the lambda value of the fuel/air mix (64) produced by the second injection (62) in the region of the ignition device (34) is lower than the lambda value of the fuel/air mix (56) which is present in the remainder of the combustion chamber (12).

2. Method for operating an internal combustion engine (10), in which fuel is injected directly into a combustion chamber (12) of the internal combustion engine (10) and a fuel/air mix (64) which is present in the combustion chamber (12) is ignited by an ignition device (34), in which method, when the internal combustion engine (10) is cold during the starting phase, at least one first injection (54), by which overall a substantially homogenous, combustible, fuel/air mix (56) is produced in the combustion chamber (12), takes place per working cycle, and then at least one second injection (62), by which a substantially rich fuel/air mix (64) is produced in the region of the ignition device (34), takes place in the same working cycle, the lambda value of the fuel/air mix (64) generated in the region of the ignition device (34) by the second injection (62) being lower than the lambda value of the fuel/air mix (56) which is present in the remainder of the combustion chamber (12), with just a simple injection still being carried out in the first working cycles, **characterized in that** the injection is only then divided into a first injection and a second injection, the number of these first working cycles being determined from the temperature of the internal combustion engine at the starting point.

3. Method according to either of Claims 1 and 2, **characterized in that** a temperature of the internal combustion engine, in particular a coolant, cylinder head or lubricant temperature, is recorded, and the injection is only divided into a first injection and a second injection when the recorded temperature is below a defined value.

4. Method according to one of the preceding claims, **characterized in that** the injection is only divided into a first injection and a second injection when a recorded rotational speed of a crankshaft of the internal combustion engine is below a defined value or within defined limits.

5. Method according to one of the preceding claims, **characterized in that** the fuel/air mix (56) which is produced during the first injection (54) is homogenouslean, in particular has a lambda value in the range from approximately 1.5 to 4.

6. Method according to one of the preceding claims, **characterized in that** the fuel/air mix (64) which is produced in the region of the ignition device (34) during the second injection (62), at least during the first working cycle has a lambda value in the range from approximately 0.7 to 0.95.

7. Method according to one of the preceding claims, **characterized in that** the quantity of fuel which is injected into the combustion chamber (12) in the first injection (54) and/or in the second injection (62) when the internal combustion engine (10) is cold and/or during the starting phase of the internal combustion engine (10) depends on the number of working cycles which have already taken place.

8. Method according to one of the preceding claims, **characterized in that** the first injection (54) takes place at the beginning of an intake stroke and the second injection (62) takes place towards the end of a compression stroke of a working cycle.

9. Method according to one of the preceding claims, **characterized in that** the divided injection is only carried out when the pressure in a fuel system (32) which provides the fuel reaches at least a certain value.

10. Method according to one of the preceding claims, **characterized in that** after a certain number of working cycles and/or when a certain operating temperature is reached, only a single injection is carried out per working cycle.

11. Method according to one of the preceding claims, **characterized in that** the total composition of the fuel/air mix, the rail pressure, the injection points, and/or the fuel quantity to be injected depend(s) on the current operating conditions, such as temperature of the internal combustion, load, engine speed.

12. Computer program, **characterized in that** it is programmed to use the method according to one of the preceding claims.

13. Electrical storage medium for a control device of an internal combustion engine, **characterized in that** a computer program according to Claim 12 is stored on it.

14. Control unit (42) for operating an internal combustion engine (10), **characterized in that** it is programmed to use the method according to one of Claims 1 to 11.

15. Internal combustion engine (10), having a combustion chamber (12), having a fuel injection apparatus (30), which injects the fuel directly into the combustion chamber (12), and having an ignition device (34), which ignites a fuel/air mix (64) that is present in the combustion chamber (12), **characterized in that** it comprises a control unit (42) according to Claim 14.

## Revendications

1. Procédé pour faire fonctionner un moteur à combustion interne (10), selon lequel du carburant est injecté directement dans une chambre de combustion (12) du moteur à combustion interne (10) et un mélange carburant-air (64) dans la chambre de combustion (12) est enflammé par un dispositif d'allumage (34),
**caractérisé en ce que**
le moteur à combustion interne (10) étant froid pendant une phase de démarrage, lors de la première paire de tours d'un vilebrequin il se produit par cycle opératoire au moins une première injection (54) qui engendre dans la chambre de combustion (12) un mélange carburant-air (56) inflammable sensiblement homogène, puis dans le même cycle opératoire au moins une deuxième injection (62) engendre dans la région du dispositif d'allumage (34) un mélange carburant-air (64) relativement riche, et la valeur lambda du mélange carburant-air (64) produit par la deuxième injection (62) dans la région du dispositif d'allumage (34) est inférieure à la valeur lambda du mélange carburant-air (56) restant disponible dans la chambre de combustion (12).

2. Procédé pour faire fonctionner un moteur à combustion interne (10), selon lequel le carburant est injecté directement dans une chambre de combustion (12) du moteur à combustion interne (10) et un mélange carburant-air (64) dans la chambre de combustion (12) est enflammé par un dispositif d'allumage (34), le moteur à combustion interne (10) étant froid pendant une phase de démarrage, il se produit par cycle opératoire au moins une première injection (54) qui engendre dans la chambre de combustion (12) un mélange carburant-air (56) inflammable sensiblement homogène, puis dans le même cycle opératoire au moins une deuxième injection (62) engendre dans la région du dispositif d'allumage (34) un mélange carburant-air (64) relativement riche, la valeur lambda du mélange carburant-air (64) produit par la deuxième injection (62) dans la région du dispositif d'allumage (34) étant inférieure à la valeur lambda du mélange carburant-air (56) restant disponible dans la chambre de combustion (12), une injection simple étant encore effectuée dans les premiers cycles opératoires,
**caractérisé en ce qu'**
à ce moment-là seulement l'injection est divisée en une première et une deuxième injection, le nombre de ces premiers cycles opératoires étant déterminé à partir de la température du moteur à combustion interne au moment du démarrage.

3. Procédé selon l'une des revendications 1 ou 2,
**caractérisé en ce qu'**
une température du moteur à combustion interne, en particulier une température de fluide de refroidissement, de tête de cylindre ou de lubrifiant, est enregistrée et l'injection n'est divisée en une première et une deuxième injection que lorsque la température enregistrée est inférieure à une valeur déterminée.

4. Procédé selon l'une des revendications précédentes,
**caractérisé en ce que**
l'injection n'est divisée en une première et une deuxième injection que lorsque la vitesse de rotation enregistrée d'un vilebrequin du moteur à combustion interne est inférieure à une valeur déterminée ou entre des limites déterminées.

5. Procédé selon l'une des revendications précédentes,
**caractérisé en ce que**
le mélange carburant-air (56) produit lors de la première injection (54) est pauvre et homogène, et a en particulier une valeur lambda d'environ 1,5 à 4.

6. Procédé selon l'une des revendications précédentes,
**caractérisé en ce que**
le mélange carburant-air (64) produit lors de la deuxième injection (62) dans la région du dispositif d'allumage (34) a au moins lors du premier cycle opératoire une valeur lambda d'environ 0,7 à 0,95.

7. Procédé selon l'une des revendications précédentes,
**caractérisé en ce que**
la quantité de carburant injectée dans la chambre de combustion (12) lorsque le moteur à combustion interne (10) est froid et/ou pendant la phase de démarrage du moteur à combustion interne (10) lors de là première injection (54) et/ou lors de la deuxième injection (62) dépend du nombre de cycles opératoires déjà effectués.

8. Procédé selon l'une des revendications précédentes,
**caractérisé en ce que**
la première injection (54) se produit au début d'une course d'admission et la deuxième injection (62) vers la fin d'une course de compression d'un cycle opératoire.

9. Procédé selon l'une des revendications précédentes,
**caractérisé en ce que**
l'injection divisée n'est effectuée que lorsque la pression dans un système d'alimentation en carburant (32) qui prépare le carburant atteint au moins une valeur déterminée.

10. Procédé selon l'une des revendications précédentes,
**caractérisé en ce qu'**
après un nombre déterminé de cycles opératoires et/ou lorsqu'une température de fonctionnement définie est atteinte, il ne se produit à nouveau plus qu'une injection par cycle opératoire.

11. Procédé selon l'une des revendications précédentes,
**caractérisé en ce que**
la composition totale du mélange carburant-air, la pression du rail, les instants d'injection et/ou la quantité de carburant à injecter dépendent des conditions de fonctionnement courantes telles que la température du moteur à combustion interne, la charge, la vitesse de rotation.

12. Programme informatique,
**caractérisé en ce qu'**
il est programmé pour appliquer un procédé selon l'une des revendications précédentes.

13. Support de mémoire électrique pour un dispositif de commande et/ou de régulation d'un moteur à combustion interne,
**caractérisé en ce qu'**
un programme selon la revendication 12 y est mémorisé.

14. Dispositif de commande et/ou de régulation (42) pour faire fonctionner un moteur à combustion interne (10),
**caractérisé en ce qu'**
il est programmé pour appliquer un procédé selon l'une des revendications 1 à 11.

15. Moteur à combustion interne (10), ayant une chambre de combustion (12), un dispositif d'injection de carburant (30) qui injecte le carburant directement dans la chambre de combustion (12), et un dispositif d'allumage (34) qui enflamme un mélange carburant-air (64) dans la chambre de combustion (12),
**caractérisé par**
un dispositif de commande et/ou de régulation (42) selon la revendication 14.
